# EUROPEAN PATENT SPECIFICATION

(11) **EP 3 026 649 B1**
(45) Date of publication and mention of the grant of the patent: **15.05.2019**
(21) Application number: 15193836.2
(22) Date of filing: 10.11.2015
(51) Int. Cl.: G08C 17/02, G06F 3/0346

(54) **POINTING APPARAUS, INTERFACE APPARATUS AND DISPLAY APPARATUS**
ZEIGEVORRICHTUNG, SCHNITTSTELLENVORRICHTUNG UND ANZEIGEVORRICHTUNG
APPAREIL DE POINTAGE, APPAREIL D'AFFICHAGE ET DISPOSITIF D'INTERFACE

(30) Priority: 27.11.2014 KR 20140167611
(43) Date of publication of application: 01.06.2016
(73) Proprietor: Samsung Electronics Co., Ltd., Gyeonggi-do 16677 (KR)
(72) Inventor: CHOI, Eun-seok, Gyeonggi-do (KR); YOO, Ho-june, Seoul (KR); CHOI, Yong-wan, Gyeonggi-do (KR); CHOI, Sang-on, Suwon-si (KR)
(74) Representative: Taor, Simon Edward William

(56) References cited:
- EP-A1- 2 133 782
- EP-A1- 2 801 891
- US-A1- 2005 212 756
- US-A1- 2009 174 530

## Description

The subject application generally relates to a pointing apparatus, and more particularly, to an interface apparatus, a pointing apparatus, and a display apparatus having higher visibility than a laser pointer in the related art.

In order to see an image outputted from a Personal Computer (PC) on a large screen, a method of projecting the image on a screen through a beam projector has often been used. However, the beam projector has low brightness and resolution, and thus, the image displayed through the beam projector is not shown clearly under bright illumination. By contrast, a display apparatus, such as, Liquid Crystal Display (LCD), may replace the beam projector since it has high brightness and resolution. Specifically, with the development of the display technologies, the manufacturing costs for a large-screen display apparatus have decreased, and thus, demand for a large-screen display apparatus will be greater.

Meanwhile, a pointer for pointing out a certain part of a displayed image is used often along with the beam projector. In the related art, a laser pointer that emits a laser light has been used. A user is able to point out a desired part on a screen projected by the beam projector by directing a light at a desired point of the screen through the laser pointer. Recently, a laser pointer featuring a simple image control function, such as, converting pages of a presentation material, has been developed.

However, as the beam projector has been replaced with a display apparatus, the visibility deterioration issue of the laser pointer in a display apparatus has emerged. That is, in a display apparatus, a laser light of the laser pointer is reflected by a surface of a display screen, and an image displayed in the display apparatus has the brightness which is similar to or higher than the brightness of the laser light.

Accordingly, there is a need for a pointing method which may replace the conventional laser pointer and provides the high visibility in a high-brightness display apparatus.

EP2801891 discloses an input apparatus is provided. The input apparatus includes a communicator configured to receive a signal from a pointing apparatus, and a controller configured to control to display the pointer on a first position of the display when a start signal is received from the pointing apparatus, and when sensed position information of the pointing apparatus is received from the pointing apparatus, the controller controls to display the pointer on a second position of the display, which corresponds to the received position information of the pointing apparatus.

The present disclosure has been provided to address the aforementioned and other problems and disadvantages occurring in the related art, and an aspect of the present disclosure provides a pointing method which provides the high visibility in a high-brightness display apparatus.

According to an exemplary embodiment, there is provided an interface apparatus as set out in claim 1.

The interface controller may be realized as a Central Processing Unit (CPU), a micro processor, or a micro controller.

The interface controller may control the communicator to determine image information on the pointer corresponding to the at least one pointing apparatus based on the received identification information and transmit the determined image information to the image processor.

The interface apparatus may further include a pairing button configured to perform pairing with the at least one pointing apparatus. In response to the pairing button being manipulated, the interface controller may control the communicator to perform pairing with the at least one pointing apparatus.

In response to pairing being requested by a new pointing apparatus while a predetermined number of a plurality of pointing apparatuses are paired with the interface apparatus, and the new pointing apparatus has a higher pairing priority than the plurality of pointing apparatuses paired with the interface apparatus, the interface controller may control the communicator to disconnect pairing of one of the plurality of pointing apparatuses paired with the interface apparatus and perform pairing with the new pointing apparatus.

The identification information received from the at least one pointing apparatus may include a MAC address.

The interface apparatus may further include a storage. The storage may store an application for calculating the display position information on the pointer corresponding to the at least one pointing apparatus based on the received sensing value.

In response to a limit being set on the number of pointers which are displayed simultaneously, the interface controller may transmit identification information on a pointing apparatus and calculated display position information of a pointer to the image processor in an order that a sensing value on a motion is received so that only the limited number of pointers are displayed simultaneously.

In response to a control command to set a pointer being received from the at least one pointing apparatus, the interface controller may control the communicator to generate a User Interface (UI) screen for setting a pointer and transmit the generated UI screen to the image processor.

In response to a control command to convert an active window being received from the at least one pointing apparatus, the interface controller may control the communicator to generate a control command for the image processor to convert and display an active window and transmit the generated control command to the image processor.

In response to a control command to display a highlight object being received from the at least one pointing apparatus, the interface controller may control the communicator to generate a control command for the image processor to display the highlight object and transmit the generated control command to the image processor.

The above and/or other aspects of the present inventive concept will be more apparent by describing certain exemplary embodiments of the present inventive concept with reference to the accompanying drawings, in which:
FIG. 1 shows a screen in which a pointer is displayed according to an exemplary embodiment;
FIG. 2A shows a pointing system according to an exemplary embodiment;
FIG. 2B is a schematic diagram illustrating a pointing system according to another exemplary embodiment;
FIG. 3 is a block diagram illustrating a structure of an interface apparatus according to an exemplary embodiment;
FIG. 4 is a view provided to describe an exemplary embodiment of displaying a plurality of pointers according to an exemplary embodiment;
FIG. 5 is a block diagram illustrating a structure of a pointing apparatus according to an exemplary embodiment;
FIG. 6 is a view illustrating an array of buttons of a pointing apparatus according to an exemplary embodiment;
FIG. 7 is a view illustrating a screen in which a pointer is set according to an exemplary embodiment;
FIG. 8 is a view illustrating a screen in which an active window is converted according to an exemplary embodiment;
FIG. 9 is a view illustrating a screen in which a highlight object is displayed according to an exemplary embodiment;
FIG. 10 is a view illustrating an appearance of an interface apparatus according to an exemplary embodiment;
FIG. 11 is a view provided to describe a scenario of displaying a plurality of pointers according to an exemplary embodiment;
FIG. 12 is a block diagram illustrating a structure of an image processor according to an exemplary embodiment;
FIG. 13 is a view illustrating a configuration of a pointing system according to another exemplary embodiment;
FIG. 14 is a view illustrating a configuration of a pointing system according to still another exemplary embodiment;
FIG. 15 is a flowchart provided to describe a pointing method according to an exemplary embodiment; and
FIG. 16 is a flowchart provided to describe a pointing method according to an exemplary embodiment.

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

The terms "first", "second", etc. may be used to describe diverse components, but the components are not limited by the terms. The terms are only used to distinguish one component from the others.

The terms used in the present application are only used to describe the exemplary embodiments, but are not intended to limit the scope of the disclosure. The singular expression also includes the plural meaning as long as it does not differently mean in the context. In the present application, the terms "include" and "consist of" designate the presence of features, numbers, steps, operations, components, elements, or a combination thereof that are written in the specification, but do not exclude the presence or possibility of addition of one or more other features, numbers, steps, operations, components, elements, or a combination thereof.

In the exemplary embodiment of the present disclosure, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

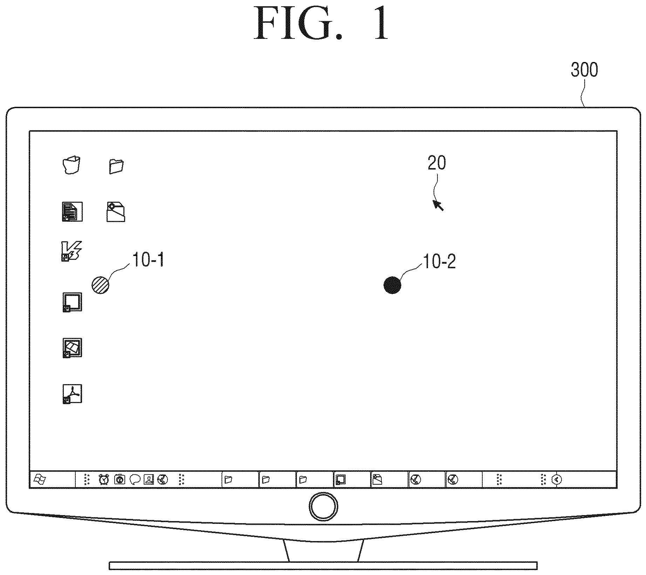

FIG. 1 shows a screen in which a pointer is displayed according to an exemplary embodiment.

In case of displaying a pointer on a screen of a display apparatus 300 by using a laser pointer, an image displayed in the display apparatus 300 has high brightness, and a laser light of the laser pointer is reflected by a surface of the display screen 300, and thus, the visibility of the pointer deteriorates. In order to resolve such problem, a method of encoding and outputting a pointer in a displayed image may be considered.

That is, as illustrated in FIG. 1, a pointer 10-1, 10-2 which is distinguished from a mouse pointer 20 in the related art may be outputted. As compared with the mouse pointer 20 in the related art, the pointer 10-1, 10-2 is distinct from the mouse pointer 20 in that the pointer 10-1, 10-2 is outputted at a position on a screen corresponding to a spatial motion through a wireless pointing apparatus. In this case, the pointer 10-1, 10-2 is outputted together with an image and has a distinguishable color and shape, and thus, the visibility of the pointer 10-1, 10-2 is enhanced. In addition, the pointer 10-1, 10-2 is distinguished from the mouse pointer 20, and thus, the pointer 10-1, 10-2 depends on only a motion of the pointing apparatus without being affected by a motion of a mouse. Accordingly, the pointer 10-1, 10-2 does not cause any confusion in use which may occur by the motion of the mouse. That is, the present exemplary embodiment outputs a pointer on a screen, and thus, may be called 'virtual pointer' in that the pointer does not perform a pointing operation by an actual light as the laser pointer in the related art does. Hereinafter, the virtual pointing method according to an exemplary embodiment will be described in further detail.

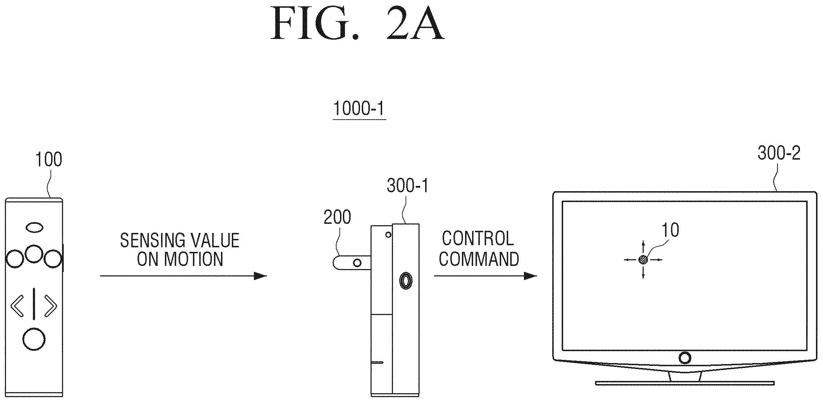

FIG. 2A shows a pointing system 1000-1 according to an exemplary embodiment.

Referring to FIG. 2A, the pointing system 1000-1 according to an exemplary embodiment includes a pointing apparatus 100, an interface apparatus 200, an image processor 300-1, and a display apparatus 300-2.

The pointing apparatus 100 receives a user input, senses a motion of the pointing apparatus 100, and transmits a sensing value to the interface apparatus 200. Alternatively, the pointing apparatus 100 may generate a corresponding pointer command based on the received user input and sensed motion information and transmit the generated pointer command to the interface apparatus 200. A motion includes a rectilinear motion without directivity variation and a directional motion (including rotational motion) with the directivity variation. Herein, the motion includes at least one of the rectilinear motion and the directional motion.

The pointing apparatus 100 transmits a start signal for starting a pointing operation, and the interface apparatus 200 receives the start signal and displays a pointer 10 on a screen. In response to the pointing operation being started, the pointing apparatus 100 senses a motion and transmits a sensing value on the sensed motion to the interface apparatus 200.

Generally, an interface apparatus refers to an apparatus which is used to connect different types or the same type of apparatuses or relay data transmission/reception. According to various exemplary embodiments, the interface apparatus 200 connects the pointing apparatus 100 and the image processor 300-1 or the pointing apparatus 100 and the display apparatus 300-2 and relays the data transmission/reception.

Hereinafter, a term 'interface apparatus' will be used mainly, but a term 'adapter' may be used as the same meaning.

A dongle apparatus is realized as a detachable apparatus in general, but according to various exemplary embodiments, an interface apparatus may be combined with or embedded in other apparatus and realized as a single body.

According to various exemplary embodiments, the interface apparatus or the adapter may be realized as a dongle apparatus.

To be specific, the interface apparatus 200 calculates display position information of a pointer corresponding to the pointing apparatus 100 based on the received sensing value and transmits the calculated display position information on the pointer to the image processor 300-1.

In order to calculate the display position information on the pointer, the interface apparatus 200 may additionally receive information on the display apparatus 300-2 from the display apparatus 300-2 or the image processor 300-1. The information on the display apparatus 300-2 may be at least one of a screen size of the display apparatus 300-2, resolution information of the display apparatus 300-2, and distance information between the display apparatus 300-2 (or the image processor 300-1) and the pointing apparatus 100.

In response to the pointing apparatus 100 being placed in a three-dimensional (3D) space, a position on a screen of the display apparatus 300-2 corresponding to a position of the pointing apparatus 100 in the 3D space may vary depending upon the resolution of the screen. For example, it is assumed that a coordinate is 10, 10 when a direction where the pointing apparatus 100 faces is projected on a screen of a first display apparatus. In this case, when screen sizes of two different display apparatuses are the same, and the resolution of each screen is 1440x810 and 1920x1080, respectively, the display position information on the pointer may be different. In order for the display position information on the pointer of the two display apparatuses to be the same, the position of the pointer needs to be calculated based on a resolution value of each display apparatus. Accordingly, the interface apparatus 200 receives resolution information on the display apparatus 300-2 from the display apparatus 300-2 or the image processor 300-1 and calculates the display position information on the pointer based on the received resolution information on the display apparatus 300-2.

In response to the pointing apparatus 100 being placed in the 3D space, the position in the screen of the display apparatus 300-2 corresponding to the position of the pointing apparatus 100 in the 3D space may vary depending upon a size of the screen of the display apparatus 300-2. For example, it is assumed that a coordinate is 10, 10 when the direction where the pointing apparatus 100 faces is projected on the screen of the first display apparatus. In this case, when the resolution of two different display apparatuses are the same, and the sizes of the screens are 40 inches and 60 inches, respectively, the position of the pointer needs to be calculated based on a size vale of each display apparatus in order for the display position information on the pointer of the two display apparatuses to be the same. Accordingly, the interface apparatus 200 may receive screen size information on the display apparatus 300-2 from the display apparatus 300-2 or the image processor 300-1 and calculate the display position information on the pointer based on the received screen size information on the display apparatus 300-2.

In response to the pointing apparatus 100 being placed in the 3D space, the position in the screen of the display apparatus 300-2 corresponding to the position of the pointing apparatus 100 in the 3D space may vary depending upon a distance between the display apparatus 300-1 and the pointing apparatus 100. For example, it is assumed that the pointing apparatus 300-2 is spaced 10 meter from the display apparatus 300-2 or the pointing apparatus 300-2 is spaced 5 meter from the display apparatus 300-2. In this case, when the direction where the pointing apparatus 100 faces is projected on the screen of the display apparatus 300-2, the coordinate may vary. Accordingly, the interface apparatus 200 may receive distance information between the pointing apparatus 100 and the display apparatus 300-2 or distance information between the pointing apparatus 100 and the image processor 300-1 from the pointing apparatus 100, the display apparatus 300-2, or the image processor 300-1 and calculate the display position information on the pointer based on the received distance information.

As described above, when the interface apparatus 200 receives information such as the distance between the pointing apparatus 100 and other apparatuses, the screen size of the display apparatus 300-2, the resolution, etc., a pointing range of the pointing apparatus 100 may be calculated accurately based on the received information. That is, in this case, the interface apparatus 200 may map a position of the pointer onto the screen of the display apparatus 300-2 accurately according to a position and direction of the pointing apparatus 100.

Meanwhile, the interface apparatus 200 may transmit the above described information to the display apparatus 300-2 directly. In this case, the display apparatus 300-2 performs a calculation operation of the image processor 300-1. As illustrated in FIG. 2A, the interface apparatus 200 is realized to be detachable with respect to the image processor 300-1. In addition, the interface apparatus 200 may be realized as an apparatus having a Universal Serial Bus (USB) port.

The image processor 300-1 receives the display position information on the pointer from the interface apparatus 200, performs an image processing operation with respect to the pointer, and transmits image information to the display apparatus 300-2. The image processor 300-1 may perform the calculation operation necessary for displaying the pointer additionally.

The display apparatus 300-2 receives the display position information on the pointer from the image processor 300-1 and displays the pointer in the corresponding position. The display apparatus 300-2 may perform the calculation operation necessary for displaying the pointer additionally. The image processor 300-1 and the display apparatus 300-2 may be realized as a single body.

Hereinafter, the detailed description on each of the pointing apparatus 100, the interface apparatus 200, the image processor 300-1, and the display apparatus 300-2 will be provided.

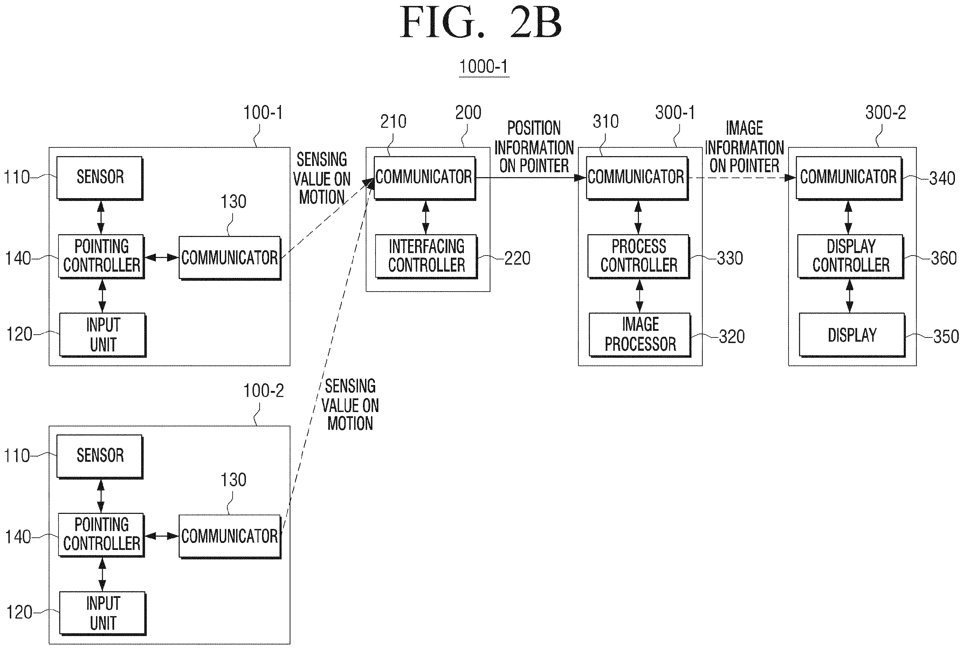

FIG. 2B is a schematic diagram illustrating the pointing system 1000-1 according to another exemplary embodiment. Specially, FIG. 2B illustrates the pointing system 1000-1 including a plurality of pointing apparatuses 100-1, 100-2.

According to an exemplary embodiment, the pointing system 1000-1 includes the plurality of pointing apparatuses 100-1, 100-2, the interface apparatus 200, the image processor 300-1, and the display apparatus 300-2.

The plurality of pointing apparatuses 100-1, 100-2 include a first pointing apparatus 100-1 and a second pointing apparatus 100-2. The plurality of pointing apparatuses 100-1, 100-2 may further include a third, a fourth.... a nth pointing apparatus. Each of the pointing apparatus 100-1, 100-2 includes a sensor 110, an input unit 120, a communicator 130, and a pointing controller 140. The detailed description on the respective components will be provided below. The first and second pointing apparatuses 100-1, 100-2 transmit a sensing value on a motion of each pointing apparatus sensed by the sensor 110 to the interface apparatus 200 wirelessly.

The interface apparatus 200 receives the sensing value wirelessly through a communicator 210. The interface apparatus 200 performs a necessary calculation operation by using the received sensing value. Specially, the interface apparatus 200 calculates the display position information on the pointer operation by using the received sensing value. The interface apparatus 200 transmits the calculated display position information on the pointer to the image processor 300-1. As illustrated in FIG. 2B, the interface apparatus 200 includes the communicator 210 and an interface controller 220. The detailed description on the respective components will be provided below.

The image processor 300-1 receives the display position information on the pointer from the interface apparatus 200 and processes an image by using the received display position information. That is, the image processor 300-1 processes the image so that the pointer is displayed in the display position information on the pointer in the image. As illustrated in FIG. 2A, in response to the interface apparatus 200 being combined to the image processor 300-1, a communicator 310 exchanges data with the interface apparatus 200 through wired communication. A process controller 330 controls the communicator 310 and an image processor 320. Specially, the processor controller 330 processes an image by controlling the image processor 320. In addition, the processor controller 330 controls the communicator 310 to transmit image-processed pointer image information to the display apparatus 300-2. The image processor 300-1 may further include other component for the image processing operation. In addition, the image processor 300-1 may further include a receiver for receiving image data regarding a content to be displayed in the display apparatus 300-2. In case of the image processor 300-1 being realized as a main body of a computer, the image processor 300-1 includes an application or an operating system for generating an image and generates an image by driving the application or operating system.

The display apparatus 300-2 receives the pointer image information from the image processor 300-1 and displays the received pointer image information. A communicator 340 of the display apparatus 300-2 receives the pointer image information from the image processor 300-1 in a wired and/or wireless manner. A display 350 displays the received pointer image information. The display 350 may include a component for displaying an image. That is, the display 350 may include a timing controller (not shown), a gate driver (not shown), a data driver (not shown), a voltage driver (not shown), a display panel, etc. In addition, as a component for an additional image processing operation, the display 350 may further include a scaler (not shown), a frame rate converter (not shown), a video enhancer (not shown), etc. A display controller 360 controls the operation of the communicator 340 and the display 350.

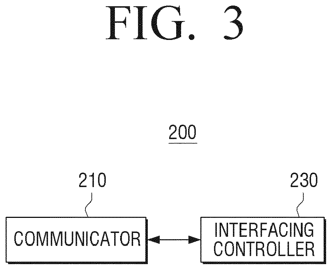

FIG. 3 is a block diagram illustrating a structure of the interface apparatus 200 according to an exemplary embodiment.

Referring to FIG. 3, the interface apparatus 200 according to an exemplary embodiment includes the communicator 210 and an interface controller 230.

The communicator 210 receives a sensing value on a motion of at least one pointing apparatus 100 from the at least one pointing apparatus 100 and transmits the display position information on the pointer to the image processor 300-1. To be specific, the communicator 210 receives a sensing value on the motion of the at least one pointing apparatus 100 from the at least one pointing apparatus 100 and transmits the display position information on the pointer corresponding to the pointing apparatus 100 calculated based on the received sensing value to the image processor 300-1. Alternatively, the communicator 210 may receive a pointing command signal according to motion information on the pointing apparatus 100. In addition, the communicator 210 receives a start signal for informing that the pointing operation is started from the at least one pointing apparatus 100 since a motion may include a directional motion and a non-directional motion. In addition, the communicator 210 may receive the pointing command signal according to the motion of the pointing apparatus 100.

The communicator 210 may receive identification information from the pointing apparatus 100. The identification information refers to information for distinguishing the pointing apparatus 100 from other pointing apparatus or other apparatus. The identification information may be a MAC address. In this case, the communicator 210 transmits the received identification information to the image processor 300-1 along with the display motion information of a pointer corresponding to the pointing apparatus 100. The pointing apparatus 100 may generate a MAC address which is intrinsic to the pointing apparatus 100 and store the generated MAC address in a storage (not shown) of the pointing address 100 in a manufacturing process. For example, the MAC address may consist of the hexadecimal numbers such as F0:65:DD:97:7C:D5.

Meanwhile, the pointing apparatus 100 may be a smart phone, and in this case, the identification information may be intrinsic identification information stored in the smart phone. That is, the identification information may be apparatus information or user information stored in the smart phone.

Specially, the identification information may be useful when the plurality of pointing apparatuses 100 are paired and operate with the interface apparatus 200.

The communicator 210 may include a component for connecting the interface apparatus 200 to the plurality of pointing apparatuses 100. The communicator 210 may connect the interface apparatus 200 to the plurality of pointing apparatuses 100 sequentially through a single communication module or may include a plurality of communication modules for respectively connecting the interface apparatus 200 to the plurality of pointing apparatuses 100.

The communicator 210 may be realized as diverse communication technologies. The communicator 210 may include a local area communication module in many cases. For example, the communicator 210 may be realized as at least one local area communication technology from among Wireless-Fidelity (Wi-Fi), Wideband Code Division Multiple Access (WCDMA), High Speed Downlink Packet Access (HSDPA), High Speed Uplink Packet Access (HSUPA), High Speed Packet Access (HSPA), mobile WiMAX, Wireless Broadband Internet (WiBro), Long Term Evolution (LTE), Bluetooth module, Infrared Data Association (IrDA), Near Field Communication (NFC), Zigbee, and wireless Local Area Network (LAN).

In response to the interface apparatus 200 being combined with the image processor 300-1 or the display apparatus 300-2, the communicator 210 may further include a wired communication module. For example, the communicator 210 may further include at least one of a High Definition Multimedia Interface (HDMI) module, a Mobile High-Definition Link (MHL) module, and a USB module.

The interface controller 230 controls overall operations of the interface apparatus 200. In response to the start signal being received from the pointing apparatus 100, the interface controller 230 may generate a control signal for displaying a pointer at a first position in the display of the display apparatus 300-2 and transmit the generated control signal to the image processor 300-1. In this case, the first position may be a predetermined position of the display. For example, the first position may be a central position or an edge position of the display of the display apparatus 300-2.

The display of the display apparatus 300-2 does not display the pointer according to the exemplary embodiment in the screen before the start signal is received. The display of the display apparatus 300-2 may display the pointer in the screen before the start signal is received, but in this case, the pointing apparatus 100 is not used. Receiving the start signal is determined as an intention of displaying a pointer by using the pointing apparatus 100. Accordingly, the interface controller 230 generates a control command to display the pointer at a predetermined position in the screen and transmits the generated control command to the image processor 300-1.

As described above, the pointer is displayed at the predetermined position when the pointing operation is started, which is the feature that distinguishes the pointer according to the exemplary embodiment from the mouse pointer in the related art. In case of the mouse pointer in the related art, when the pointing operation is stopped after a computer is booted up and the pointing is restarted, the mouse pointer does not start the pointing operation at a new position, since the mouse pointer is connected in a wired manner, and thus, a moving range of the pointer is limited clearly and the pointer does not move out of the moving range. However, a user having the pointing apparatus 100 may be located anywhere in a space. For example, a user who makes a presentation may be located in front of the screen or may be located in the side of the screen. In this case, when the pointer is displayed based on an actual position of the pointing apparatus 100, the pointer may not be mapped onto the screen. Accordingly, it is required to set a reference point of the pointer.

In addition, in response to the sensing value on the sensed motion of the pointing apparatus 100 being received from the pointing apparatus 100, the interface controller 230 controls the communicator 210 to calculate the display position information on the pointer corresponding to the pointing apparatus 100 based on the received sensing value and transmit the calculated display position information on the pointer to the image processor 300-1. In this case, the interface controller 230 may further receive the sensing value on a sensed direction of the pointing apparatus 100 from the pointing apparatus 100, calculate the display position information on the pointer corresponding to the pointing apparatus 100, and transmit the calculated display position information on the pointer to the image processor 300-1. The calculated display position information on the pointer includes position information in the display corresponding to a position of the pointing apparatus 100 in the 3D space. That is, the position information is a two-dimensional (2D) coordinate in a display screen mapped onto the actual 3D spatial coordinate.

Generally, a vector value where the pointing apparatus 100 moves towards the display apparatus 300-2 is not considered. However, as a distance between the pointing apparatus 100 and the display apparatus 300-2 increases or decreases, the exemplary embodiment of changing a size of a pointer may be realized. That is, in response to the pointing apparatus 100 moving close to the interface apparatus 200, the image processor 300-1, or the display apparatus 300-2 in a space, the size of a displayed pointer may increase, and in response to the pointing apparatus 100 moving far from the interface apparatus 200, the image processor 300-1, or the display apparatus 300-2, the size of the displayed pointer may decrease.

The pointing apparatus 100 is an apparatus for displaying a pointer in a pointing direction (front surface), and thus, a motion of a direction angle of the pointing apparatus 100 is considered. For example, it is assumed that the front surface of the pointing apparatus 100 points out a first position in the display of the display apparatus 300-2, the pointing apparatus 100 moves in parallel in a horizontal direction, and then the front surface of the pointing apparatus 100 points out a second position of the display. In this case, the pointer should be displayed to move from the first position to the second position in the screen. However, the pointing apparatus 100 may rotate on a certain position of the pointing apparatus 100 without moving in the horizontal direction. When the pointing apparatus 100 points out the second position after the rotation, the pointer should be moved from the first position to the second position as in the case where the pointing apparatus 100 moves in the horizontal direction. That is, in the above exemplary embodiments, the motions of the pointer should be displayed similarly.

As described below, the pointing apparatus 100 senses a motion of the pointing apparatus 100 in the 3D space at predetermined time intervals. That is, in response to the sensed motion information being changed, that is, in response to a motion sensor value of the pointing apparatus 100 being changed differently from the previous sensing value, the pointing apparatus 100 transmits the sensing value on the newly sensed motion to the interface apparatus 200.

The interface controller 230 may display the pointer based on a result obtained by combining the start signal and the motion of the pointing apparatus. As an example, the interface controller 230 may control to update the display of the pointer only when the changed motion information is received within a predetermined time after the start signal is received. As another example, the interface controller 230 may control to update the display of the pointer only when the start signal and the changed motion information are received simultaneously after the start signal is received. The latter example belongs to a case where the pointer is designed so as to be moved while a control button of the pointing apparatus 100 is pressed by the user. In this case, in response to the control button being pressed, the start signal and the position information may be received simultaneously. In response to an input with respect to the control button disappearing, the pointer disappears from the screen. The pointer may be realized so as to return to a predetermined position without disappearing or to be fixed at the position.

As described above, the pointer of the pointing apparatus 100 needs to be distinguished from the mouse pointer in the related art. Generally, a mouse is an interface apparatus for selecting a certain icon or item. Accordingly, a mouse pointer operates with a computer operating system organically, and the operating system reacts to a motion of the mouse pointer sensitively. For example, in case of the presentation, in response to a mouse being moved during the presentation, the operating system or an application controls convert a screen to get out of the presentation screen or displays other menu. However, according to an exemplary embodiment, the motion of the pointer of the pointing apparatus 100 does not affect an item of the operating system or the application.

In case of displaying the pointer only in response to button manipulation of the pointing apparatus 100, the pointer is not displayed any more in the screen as long as the button manipulation is not performed. However, in case of the pointer being designed to be continuously displayed at the last position even when the button manipulation is not performed, in response to the motion of the pointing apparatus 100 not being sensed for a predetermined time after the pointer is displayed in the screen, the interface controller 230 transmits a control command to control the pointer to disappear from the display of the display apparatus 300-2 to the image processor 300-1.

Meanwhile, the pointer of the pointing apparatus 100 is a means for pointing out an object on a screen, and thus, needs to be displayed to be distinguishable.

In addition, the interface apparatus 200 may further include a storage (not shown), and the storage may store an application for calculating the display position information on the pointer corresponding to the pointing apparatus 100 based on the received sensing value. That is, the storage may store the application which performs the function of the interface controller 230 described above. In addition, in response to the interface apparatus 200 being combined with the image processor 300-1, the application may operate automatically.

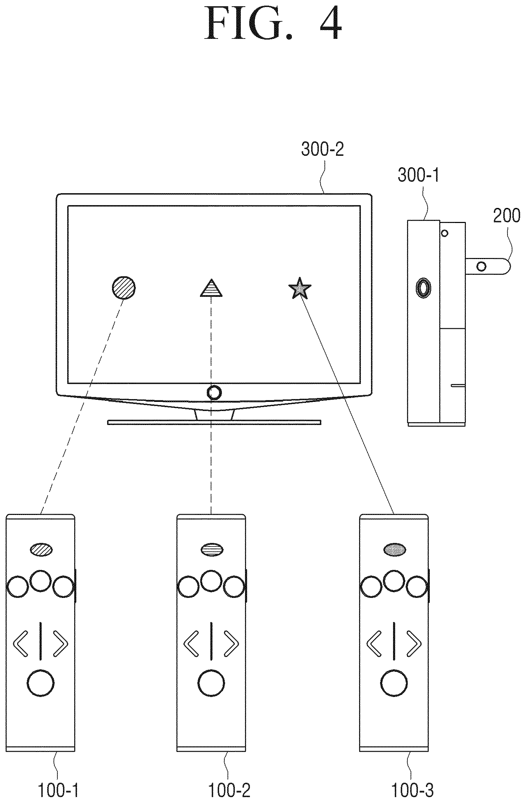

FIG. 4 is a view provided to describe an exemplary embodiment of displaying a plurality of pointers according to an exemplary embodiment.

In response to the plurality of pointing apparatuses 100-1, 100-2, 100-3 being used by a plurality of users, the plurality of users need to pay attention to a position of the pointer, and thus, a color or shape of a plurality of pointers may be displayed to be distinguishable. To be specific, the plurality of pointers may be displayed to be distinguished from each other in terms of color, shape, etc. For example, a first pointer may be displayed in red, and a second pointer may be displayed in yellow.

Accordingly, the interface controller 230 may control the communicator 210 to determine the image information corresponding to each of the plurality of pointing apparatuses 100-1, 100-2, 100-3 based on the identification information received from the plurality of pointing apparatuses 100-1, 100-2, 100-3 and transmit the determined image information to the image processor 300-1.

In the exemplary embodiment of FIG. 4, the first pointing apparatus 100-1 transmits first identification information to the interface apparatus 200,. The interface apparatus 200 determines the image information on the pointer so as to have a first color in a circle shape based on the first identification information and transmits the determined image information to the image processor 300-1. The image processor 300-1 processes an image based on the received image information and transmits the processed image to the display apparatus 300-2. The display apparatus 300-2 displays the processed image. In the same manner, the second pointing apparatus 100-2 transmits second identification information to the interface apparatus 200.. The interface apparatus 200 determines the image information on the pointer so as to have a second color in a triangle shape based on the second identification information and transmits the determined image information to the image processor 300-1. The image processor 300-1 processes an image based on the received image information and transmits the processed image to the display apparatus 300-2. The display apparatus 300-2 displays the processed image. The third pointing apparatus 100-2 operates in the same manner.

Hereinafter, the structure and operations of the pointing apparatus 100 will be described.

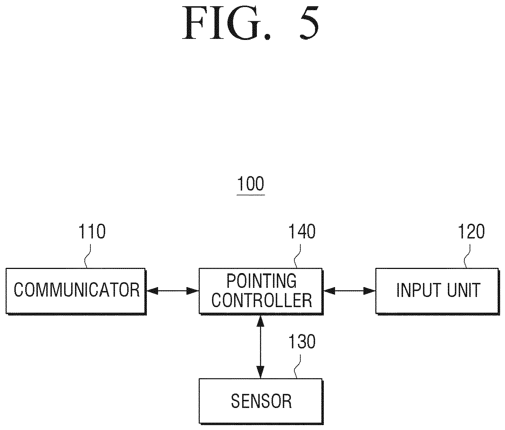

FIG. 5 is a block diagram illustrating a structure of the pointing apparatus 100 according to an exemplary embodiment.

Referring to FIG. 5, the pointing apparatus 100 according to an exemplary embodiment includes the communicator 110, the input unit 120, the sensor 130, and the pointing controller 140.

The communicator 110 communicates with the interface apparatus 200. To be specific, the communicator 110 transmits a start signal of a pointing input operation to the interface apparatus 200 or transmits sensed motion information on the pointing apparatus 100 to the interface apparatus 200. The communicator 110 may transmit a sensing value on a sensed direction of the pointing apparatus 100 to the interface apparatus 200.

The communicator 110 may be realized as diverse communication technologies. The communicator 110 may include a local area communication module in many cases. For example, the communicator 110 may be realized as various local area communication technologies such as Wi-Fi, WCDMA, HSDPA, HSUPA, HSPA, mobile WiMAX, WiBro, LTE, Bluetooth module, IrDA, NFC, Zigbee, wireless LAN, etc.

The input unit 120 receives a user input for starting the pointing input operation. For doing this, the input unit 120 may include one or more buttons. In response to the button being manipulated by the user, a signal for starting the pointing input operation is generated or a direction and motion of the pointing apparatus 100 are sensed. The button may be designed in various forms including a tact button, a touch button, a two-step input button, a wheel, a switch button, etc.

The button may be classified by function.

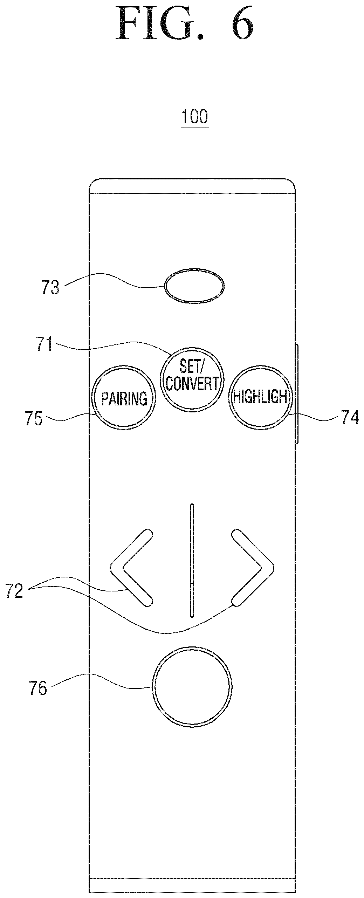

FIG. 6 is a view illustrating an array of buttons of the pointing apparatus 100 according to an exemplary embodiment.

As illustrated in FIG. 6, the pointing apparatus 100 may further include a set/conversion button 71, a direction button 72, a highlight button 74, a pairing button 75, and a center button 76. The pointing apparatus 100 may further include an indicator 73 for turning on a lamp. The pointing apparatus 100 may be realized to include only a part of the above buttons. Each button may be realized as a touch button, not a physical button.

The center button 76 is designed so that the pointer is generated in a predetermined position in the screen in response to the center button 76 being manipulated and the pointer is moved while the center button 76 is pressed. That is, in response to the center button 76 being pressed, the pointing controller 140 generates a control command to locate the pointer at a predetermined position in the screen and transmits the generated control command to the interface apparatus 200 through the communicator 110. The interface apparatus 200 processes (or does not process) the control command and transmits the control command to the image processor 300-1, and the image processor 300-1 performs the image processing operation with respect to the pointer and transmits image information to the display apparatus 300-2. The display apparatus 300-2 displays the pointer at the predetermined position in the screen.

The sensing value on the motion of the pointing apparatus 100 is transmitted to the interface apparatus 200 while the center button 76 is pressed for a long time. The interface apparatus 200 calculates the display position information on the pointer corresponding to the pointing apparatus 100 based on the received sensing value. The interface apparatus 200 transmits the calculated display position information on the pointer to the image processor 300-1. The image processor 300-1 and the display apparatus 300-2 display the pointer in the above described method. The pointer moves in the screen according to the motion of the pointing apparatus 100. In addition, the center button 76 may be used to generate a control command to set final function setting as described below.

The direction button 72 provides a function of converting a page in response to the presentation being executed. For example, a left-direction button may be used to generate a control command to display a previous page, and a right-direction button may be used to generate a control command to display a next page. In addition, the direction button 72 may be used to move the pointer finely. In response to the left-direction button being manipulated, the pointing controller 140 may generate a control command to move the pointer to the left finely, and in response to the right-direction button being manipulated, the pointing controller 140 may generate a control command to move the pointer to the right finely. In addition, as described below, the direction button 72 may be used as a button for selecting a menu.

The set/conversion button 71 is a button for generating a control command to set a pointer or convert an active window.

In response to the set/conversion button 71 being pressed for a short time, the pointing controller 140 may generate a control command to display a UI for setting a pointer and transmit the generated control command to the interface apparatus 200. The set/conversion button 71 may be manipulated in other methods including pressing the button for a long time or pressing the button a plurality of times. The setting function and the converting function may be realized as different buttons.

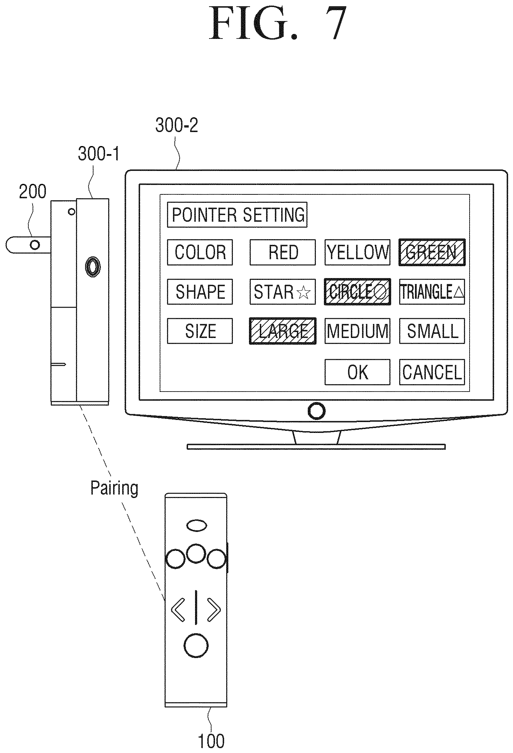

FIG. 7 is a view illustrating a screen in which a pointer is set according to an exemplary embodiment.

In response to the set/conversion button 71 being pressed once for a short time, the pointing controller 140 may generate a control command to display a UI for setting a pointer and transmit the generated control command to the interface apparatus 200. The interface apparatus 200 may transmit the received control command to the image processor 300-1, and thus, the display apparatus 300-2 may display the UI of FIG. 7 in the display. The user is able to select a menu item by manipulating the direction button 72 of the pointing apparatus 100 and set a desired menu item by manipulating the center button 76. The user may use other buttons to select or set a menu item.

In the exemplary embodiment of FIG. 7, a color of the pointer is set to be 'green,' a shape of the pointer is set to be 'circle,' and a size of the pointer is set to be 'large.' In response to the center button 76 being manipulated once again as a final manipulation, the pointer setting is completed. In response to the pointer setting being completed, the interface controller 230 of the interface apparatus 200 stores pointer information corresponding to the identification information on the pointing apparatus 100 as the set information and transmits the information to the image processor 300-1 so that the set pointer is displayed.

In response to the set/conversion button 71 being pressed for a long time (over a predetermined time), the pointing controller 140 may generate a control command to display a UI for converting an active window and transmit the generated control command to the interface apparatus 200. The set/conversion button 71 may be manipulated in other methods including pressing the button for a short time or pressing the button a plurality of times.

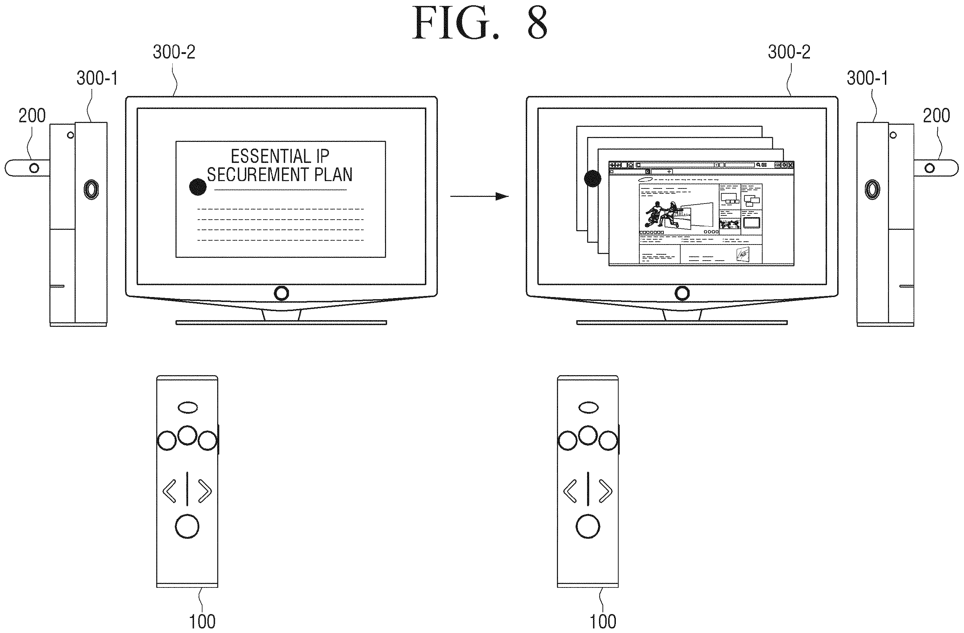

FIG. 8 is a view illustrating a screen in which an active window is converted according to an exemplary embodiment.

In response to the set/conversion button 71 being pressed for a long time, the pointing controller 140 may generate a control command to convert an active window and transmit the generated control command to the interface apparatus 200. The interface apparatus 200 may transmit the control command to the image processor 300-1, and thus, the display apparatus 300-2 may display the UI of FIG. 8 in the display. The user is able to convert the active window by manipulating the direction button 72 of the pointing apparatus 100 and set a desired active window by manipulating the center button 76. The user may use other buttons to select or set an active window.

In the exemplary embodiment of FIG. 8, the set/conversion button 71 is manipulated while the presentation is displayed, and thus, the UI for converting an active window is displayed, and a web browser screen is displayed. In response to the set/conversion button 71 being pressed for a long time as a final manipulation, the page is converted to the web browser screen.

The highlight button 74 is a button for displaying a highlight object in the display. That is, in response to the highlight button 74 being manipulated, the pointing controller 140 may generate a control command to display the highlight object and transmit the generated control command to the interface apparatus 200.

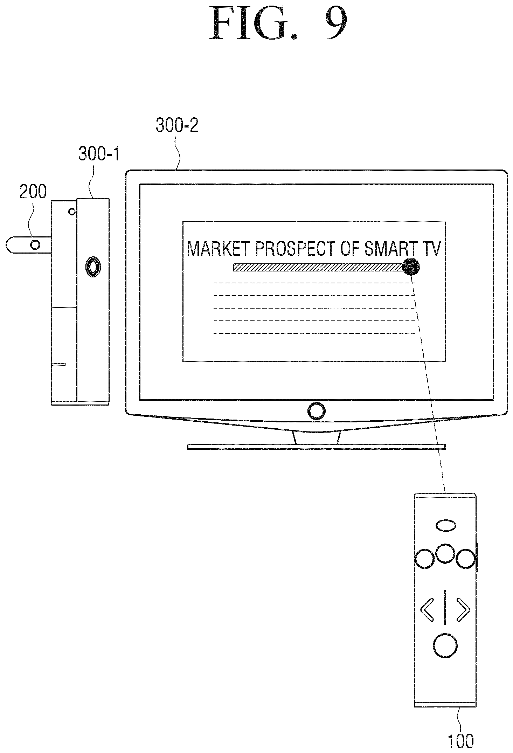

FIG. 9 is a view illustrating a screen in which a highlight object is displayed according to an exemplary embodiment.

In response to the highlight button 74 being manipulated, the pointing controller 140 may generate a control command to display a highlight object in the display and transmit the generated control command to the interface apparatus 200. The interface apparatus 200 transmits the received control command to the image processor 300-1, and thus, the display apparatus 300-2 displays the highlight object in the display. In response to the pointing apparatus 100 being moved while the highlight button 74 is manipulated (for example, while the highlight button 74 is pressed), at least one of the sensing values on the motion of the pointing apparatus 100 sensed by the sensor 130 is transmitted to the interface apparatus 200 along with the control command to display the highlight object. The interface apparatus 200 determines a display position of the pointer in the above described method and transmits a control command to display the highlight object at the display position of the pointer to the image processor 300-1. Accordingly, as illustrated in FIG. 9, a highlight line may be displayed in the screen along a motion route of the pointing apparatus 100. According to the motion route of the pointing apparatus 100, various highlight objects, such as, a highlight circle, a highlight curve, etc., may be displayed.

The indicator 73 displays an operational status of the pointing apparatus 100 and may consist of a lamp for emitting a light. The lamp may be turned on in response to the pointing apparatus 100 being used. That is, in response to the pointing apparatus 100 being moved or the center button 76 being manipulated, the lamp may be turned on. In this case, the lamp may emit a light in the same color as the pointer of the pointing apparatus 100.

The pairing button 75 is a button for pairing the pointing apparatus 100 with interface apparatus 200. That is, in response to the pairing button 75 being manipulated, pairing between the pointing apparatus 100 and the interface apparatus 200 is performed. To be specific, in response to the pairing button 75 being manipulated, the pointing controller 140 controls the communicator 110 to perform pairing with the interface apparatus 200. The pairing method of the pointing apparatus 100 and the interface apparatus 200 will be described below in further detail. Meanwhile, the pairing button 75 may be realized as a touch button, not a physical button.

Hereinafter, the detailed description on the other components of the pointing apparatus 100 will be provided. The sensor 130 senses the position information on the pointing apparatus 100. In response to a user input being received through the input unit 120, the sensor 130 may sense motion information on the pointing apparatus 100 at predetermine time intervals. The motion includes at least one of a non-directional motion and a directional motion. The sensor 130 may include at least one of an acceleration sensor, an angular speed sensor, and a geomagnetic sensor.

The acceleration sensor senses variation of speed over a unit time. The acceleration sensor may be realized as three axes. In case of a three-axes acceleration sensor, the acceleration sensor has an x-axis acceleration sensor, a y-axis acceleration sensor, and a z-axis acceleration sensor which are arrayed in different directions and cross at right angles.

The acceleration sensor converts an output value of each of the x-axis acceleration sensor, the y-axis acceleration sensor, and the z-axis acceleration sensor into a digital value and provides a pre-processor with the digital value. In this case, the pre-processor may include a chopping circuit, an amplifying circuit, a filter, and an Analog-to-Digital (A/D) converter. Accordingly, an electronic signal outputted from three-axes acceleration sensor is chopped, amplified, filter, and converted into a digital voltage value.

The angular speed sensor senses variation of a predetermined direction of the pointing apparatus 100 for a unit time to sense a angular speed. The angular speed sensor may use a gyroscope having three axes.

Six axes of an inertia sensor may represent relative pointing. According to an exemplary embodiment, the pointing apparatus 100 may be realized through the relative pointing method. The relative pointing method refers to a device where direct mapping does not exist between a pointing apparatus and a screen. That is, a start point and a current position of the pointing apparatus 100 may be sensed by using only the inertial sensor, and a movement of the pointer may be displayed in the screen by mapping position variation.

Meanwhile, the pointing apparatus 100 may be realized through an absolute pointing method by additionally using a geomagnetic sensor. The geomagnetic detects an azimuth by sensing a flow of a magnetic field. The geomagnetic sensor may sense a bearing coordinate of the pointing apparatus 100 and may sense a direction in which the pointing apparatus 100 is placed based on the detected bearing coordinate.

The geomagnetic sensor senses a terrestrial magnetism by measuring a voltage value induced by the terrestrial magnetism by using a flux-gate. The geomagnetic sensor may be realized as two-axes geomagnetic sensor or a three-axes geomagnetic sensor. In this case, the terrestrial magnetism output values obtained by the geomagnetic sensors of respective axes vary depending upon a level of surrounding terrestrial magnetism, and thus, normalization for mapping a terrestrial magnetism output value onto a predetermined range (for example, -1 to 1) is performed in general. The normalization is performed by using a normalization factor such as a scale value, an offset value, etc. In order to calculate the normalization factor, an output value of the geomagnetic sensor is obtained by rotating the geomagnetic sensor a plurality of times, and a maximum value and a minimum value are detected out of the output value. A value normalized by using the normalization factor is used in azimuth correction.

The absolute pointing method refers to a method of directly mapping a position of a pointing apparatus onto a position of a pointer on a screen. The absolute pointing method may provide more intuitive user experience. That is, according to the absolute pointing method, in response to a user pointing out an object on a screen by using the pointing apparatus 100, a pointer is displayed at the position. In the absolute pointing method, displaying the pointer at a first position when the pointing operation is started provides the user with a pointing guide.

In addition, the pointing controller 140 controls overall operations of the pointing apparatus 100. To be specific, the pointing controller 140 controls the identification information on the pointing apparatus 100, a user input, and a sensing value on a sensed motion to be transmitted to the interface apparatus 200. In addition, the pointing controller 140 may control to perform the calculation operation, generate a corresponding control command, and transmit the generated control command to the interface apparatus 200. In this case, the pointing controller 140 performs a part of functions of the pointing controller 230 of the interface apparatus 200 described above.

Meanwhile, in response to any user command not being received through the input unit 120 for a predetermined time and in response to the sensing value on the motion of the pointing apparatus 100 not being sensed through the sensor 130 or a user command not being received through the input unit 120, the pointing controller 140 may selectively cut off power with respect to the internal component of the pointing apparatus 100 and convert a status of the pointing apparatus 100 into a sleep status.

However, in response to a user command being received through the input unit 120 in the sleep status or a motion of the pointing apparatus 100 being sensed through the sensor 130, the pointing apparatus 100 may apply the power to the internal component to which the power is cut off and convert the status of the pointing apparatus 100 into a wake-up status.

The above described operation enables the pointing apparatus 100 to effectively use the power depending upon an operational status of the pointing apparatus 100 and reduce the power consumption, as in the case where the user places the pointing apparatus on a table 100 and a predetermined time elapses in unused state.

The pointing controller 140 controls overall operations of the pointing apparatus 100. The pointing controller 140 includes a hardware element, such as, Micro Processing Unit (MPU), CPU, Cache Memory, Data Bus, etc., and a software element, such as, operating system, application for performing a particular purpose, etc. A control command with respect to each component of the pointing apparatus 100 is read from a memory according to a system clock, and an electronic signal is generated according to the read control command to operate the respective components.

Although not depicted, the pointing apparatus 100 may include a storage, a power unit, etc. The power unit may be designed so as to have the above described power reducing structure. The storage may store the identification information on the pointing apparatus 100.

In addition, the pointing apparatus 100 may be realized as one of smart phone, smart watch, and other wearable device.

Hereinafter, the detailed description on an appearance of the interface apparatus 200 will be provided.

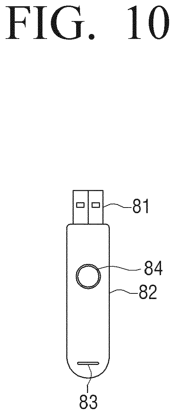

FIG. 10 is a view illustrating an appearance of the interface apparatus 200 according to an exemplary embodiment.

Referring to FIG. 10, the interface apparatus 200 may include a port 81, a body 82, an indicator 83, and a pairing button 84.

The port 81 is a component for combining the interface apparatus 200 with the image processor 300-1. The port 81 may include at least one of a power supply line, a data supply line, and a control line. The interface apparatus 200 transmits a control command with respect to a pointer to the image processor 300-1 through the port 81.

The body 82 may accommodate the communicator 210 and the interface controller 230 which are the components of the interface apparatus 200 and may further accommodate other various circuits according to the need.

The indicator 83 displays the operation of the pointer and may be realized as a lamp for emitting a light. In response to the pointing input being performed through the plurality of pointing apparatuses, the light color of the lamp may vary depending upon a pointing apparatus that transmits a signal.

The pairing button 84 is a button for pairing the pointing apparatus 100 with the interface apparatus 200. That is, in response to the pairing button 84 being manipulated, pairing between the pointing apparatus 100 and the interface apparatus 200 is performed. To be specific, in response to the pairing button 84 being manipulated, the interface controller 230 controls the communicator 210 to perform pairing with the pointing apparatus 100.

Meanwhile, one pointing apparatus 100 may be paired with one interface apparatus 200, or a plurality of pointing apparatuses 100 may be paired with one interface apparatus 200. That is, various pairing methods may be used.

In response to the pairing button 75 of the first pointing apparatus 100-1 being manipulated while the pairing button 84 of the interface apparatus 200 is manipulated, pairing between the first pointing apparatus 100-1 and the interface apparatus 200 is performed. In response to the pairing button 75 of the second pointing apparatus 100-2 being manipulated while the pairing button 84 is the interface apparatus 200 is manipulated after the first pointing apparatus 100-1 is paired with the interface apparatus 200, paring between the second pointing apparatus 100-2 and the interface apparatus 200 is performed. The interface apparatus 200 may be paired with a plurality of pointing apparatuses in this manner.

In response to the interface apparatus 200 communicating with the pointing apparatus 100 according to a Bluetooth method, the interface apparatus 200 may be a master apparatus, and the pointing apparatus 100 may be a slave apparatus. Alternatively, the interface apparatus 200 may be the slave apparatus, and the pointing apparatus 100 may be the master apparatus.

Generally, a Bluetooth pairing process is started with a step that the master apparatus transmits an inquiry message and the slave apparatus scans the inquiry message and responds to the inquiry message. Accordingly, in case of the pointing apparatus 100 being the master apparatus, the pointing apparatus 100 transmits the inquiry message, and the interface apparatus 200 scans the inquiry message through a frequency hopping method and responds to the inquiry message.

The interface apparatus 200 may listen to the inquiry message and transmit an Extended Inquiry Response (EIR) Packet. This operation is also performed in the frequency hopping method. The pointing apparatus 100 transmits an association notification packet. In response to the interface apparatus 200 receiving the association notification packet, the interface apparatus 200 transmits a baseband ACK to the pointing apparatus 100, and thus, pairing is performed.

Meanwhile, a plurality of pointing apparatuses and the interface apparatus 200 may be paired at a time. That is, in response to the pairing button 75 of each of the first pointing apparatus 100-1 and the second pointing apparatus 100-2 being manipulated while the pairing button 84 of the interface apparatus 200 is manipulated, pairing is performed between the first pointing apparatus 100-1 and the second pointing apparatus 100-2 and the interface apparatus 200. That is, a plurality of pointing apparatuses and the interface apparatus 200 may be paired in this manner.

Meanwhile, pairing may be performed by manipulating only the pairing button 75 of the pointing apparatus 100. In this case, the interface apparatus 200 may enter into a pairing standby mode in response to the interface apparatus 200 being connected to the image processor 300-1. In response to the interface apparatus 200 being connected to the image processor 300-1, the interface apparatus 200 may enter into a state of listening to the inquiry message. In response to the association notification packet being received, the interface apparatus 200 transmits the baseband ACK to perform pairing. In order to distinguish the plurality of pointing apparatuses, the above described MAC address may be used as the identification information on the pointing apparatus 100.

In addition, the number of pointing apparatus 100 to be paired with the interface apparatus 200 may be limited since too numerous number of pointers may cause the confusion in use. This operation may be performed according to the method of limiting pairing and the method of limiting the number of pointers without limiting pairing.

In case of limiting the number of pointers, the most simple way is performing pairing in a requested order. That is, in response to each of the plurality of pointing apparatuses 100 being paired with the interface apparatus 200 in the order of requesting for pairing, and parings of a predetermined number of pointing apparatuses 100 being performed, other pairing request may not be accepted until any one of the paired pointing apparatuses 100 is disconnected.

In response to a new pairing request being received, that is, in response to a new pointing apparatus requesting for pairing while the predetermined number of pointing apparatuses are paired with the interface apparatus 200, the interface controller 230 of the interface apparatus 200 may control the communicator 210 to disconnect pairing of the pointing apparatus which was paired as the first sequence from among the plurality of pointing apparatuses paired with the interface apparatus 200 and perform pairing with the new pointing apparatus.

In addition, in response to a new pointing apparatus requesting for pairing while the predetermined number of pointing apparatuses are paired with the interface apparatus 200, and the new pointing apparatus having the higher pairing priority than the plurality of pointing apparatuses 100 paired with the interface apparatus 200, the interface controller 230 of the interface apparatus 200 may control the communicator 210 to disconnect pairing of one of the plurality of pointing apparatuses 100 paired with the interface apparatus 200 and perform pairing with the new pointing apparatus. In this case, the pointing apparatus of which pairing is disconnected may be a pointing apparatus having the lowest pairing priority from among the plurality of pointing apparatuses 100 paired with the interface apparatus 200.

According to the exemplary embodiment, the pointing apparatus having the highest pairing priority may be paired with the interface apparatus 200 every time the pointing apparatus requests for pairing. However, the pointing apparatus having the low pairing priority may be paired or may not be paired with the interface apparatus 200.

The method of not limiting pairing is used when the number of pointers displayed in the screen is fewer than the number of available pairings. That is, in response to a pairing request of the pointing apparatuses 100 being received, the interface apparatus 200 performs pairing with any of the pointing apparatuses 100 but limits the number of pointers displayed in the screen. That is, as described above, the interface apparatus 200 may display the pointers by limiting the number of pointers so as not to exceed a predetermined number or limiting the number of pointers according to the priority. Meanwhile, the pointer may be displayed in the order that the pointing apparatus 100 is moved or in the order that the button is manipulated. That is, in response to a limit being set on the number of pointers which are displayed simultaneously, the interface controller 230 of the interface apparatus 200 controls to transmit the identification information on the pointing apparatus 100 and the calculated display position information on the pointer to the image processor 300-1 in the order that the sensing value on the motion is received so that only the limited number of pointers are displayed simultaneously. In this case, in response to any certain pointing apparatus 100 not being used any more, the pointer of other pointing apparatus 100 may be displayed in the screen.

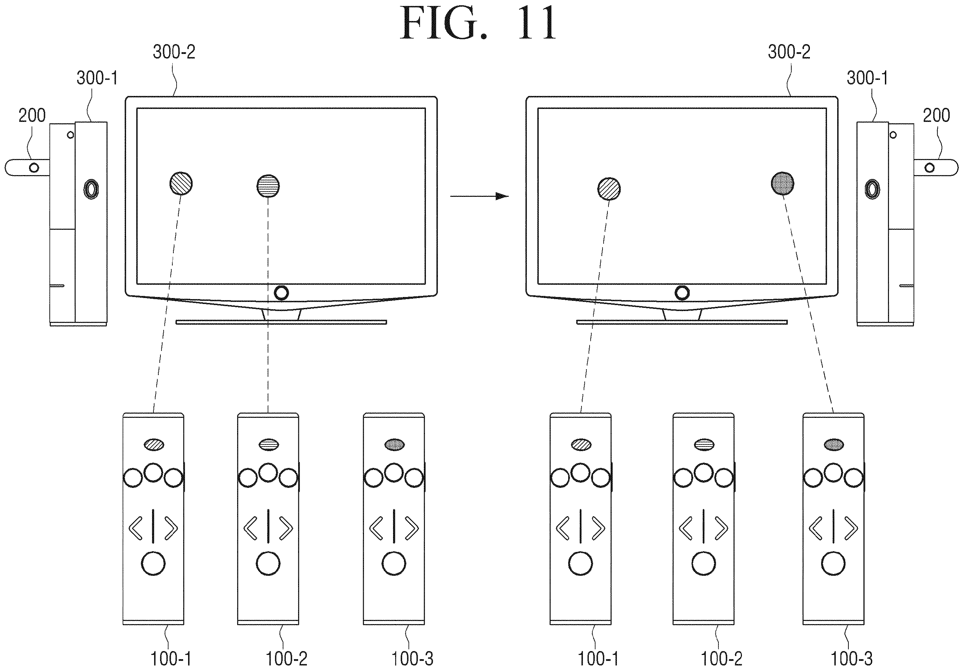

FIG. 11 is a view provided to describe a scenario of displaying a plurality of pointers according to an exemplary embodiment.

As illustrated in FIG. 11, in response to a pairing request of a third pointing apparatus 100-3 being received while the first pointing apparatus 100-1 and the second pointing apparatus 100-2 are paired with the interface apparatus 200, the third pointing apparatus 100-3 may be paired in the above described method, and pairing of the second pointing apparatus 100-2 may be terminated.

Alternatively, it is possible to permit pairings of all of the first to third pointing apparatuses 100-1, 100-2, 100-3 and limit only the display of the pointer. That is, the pointer of the first pointing apparatus 100-1 and the pointer of the second pointing apparatus 100-2 are displayed first, and then the pointer of the first pointing apparatus 100-1 and the pointer of the third pointing apparatus 100-3 may be displayed.

The limit on the number of parings or limit on the number of pointers may be set according to a user command.

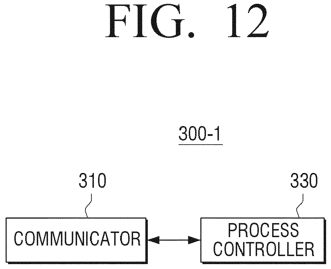

FIG. 12 is a block diagram illustrating a structure of the image processor 300-1 according to an exemplary embodiment.

The image processor 300-1 may be realized as one of a set top box, a PC, a laptop computer, a tablet PC, and a display apparatus.

The image processor 300-1 may include the communicator 310 which is connected and communicate with the interface apparatus 200 and the process controller 330.

The communicator 310 performs the wired communication with the interface apparatus 200. The communicator 310 receives a control command and pointer information from the interface apparatus 200. The communicator 310 may be realized as the above described local area communication module or may include a wired communication module. Specially, the communicator 310 may include a USB module.

The process controller 330 controls overall operations of the image processor 300-1. The process controller 330 outputs image data in which a pointer is displayed by using the pointer information received from the interface apparatus 200. Specially, the process controller 330 receives the calculated display position information on the pointer calculated based on the sensing value sensed by the pointing apparatus 100 and the identification information from the interface apparatus 200. In addition, the process controller 330 generates a control command to display a pointer corresponding to the identification information in the received display position information on the pointer and transmits the generated control command to the display apparatus 300-2.

Although not depicted, the image processor 300-1 includes common components for the image processing operation, That is, the image processor 300-1 includes an image processor, an image receiver, a storage, etc. As described above, the image processor 300-1 may transmit a processed image to the display apparatus 300-2.

The display apparatus 300-2 receives image information from the image processor 300-1 and displays the received image information. The display apparatus 300-2 may be realized as diverse apparatuses. That is, the display apparatus 300-2 may be realized as one of digital television (TV), tablet PC, Large Format Display (LFD), Portable Multimedia Player (PMP), Personal Digital Assistant (PDA), smart phone, mobile phone, digital picture frame, digital signage, and kiosk.

In the above described exemplary embodiment, the image processor 300-1 and the display apparatus 300-2 are distinct components, but the image processor 300-1 and the display apparatus 300-2 may be realized as a single body.

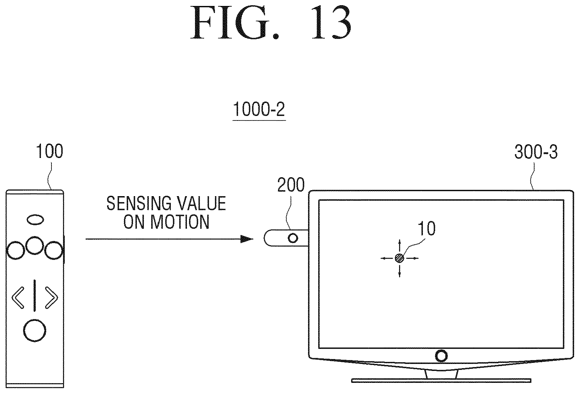

FIG. 13 is a view illustrating a configuration of a pointing system 1000-2 according to another exemplary embodiment.

As illustrated in FIG.13, the pointing system 1000-2 according to another exemplary embodiment includes the pointing apparatus 100, the interface apparatus 200, and the display apparatus 300-3.

The pointing apparatus 100 has been described above, and thus, the overlapped description is omitted. The interface apparatus 200 receives a sensing value on a motion from the pointing apparatus 100, generates a control command with respect to a pointer, and transmits the generated control command to the display apparatus 300-3. The above described function of the image processor 300-1 is included in the display apparatus 300-3. The display apparatus 300-3 displays the pointer in the display according to the motion of the pointing apparatus 100.

Meanwhile, the function and operation of the interface apparatus 200 may be included in a display apparatus 300-4.

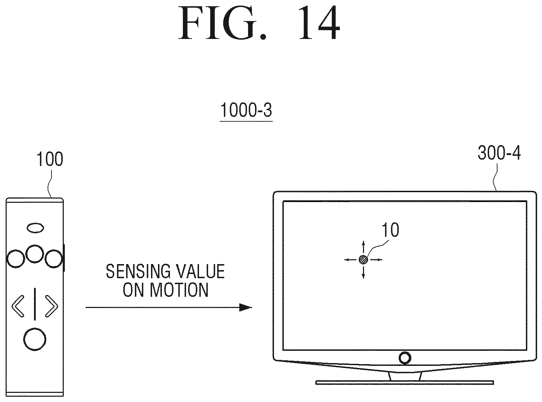

FIG. 14 is a view illustrating a configuration of a pointing system 1000-3 according to still another exemplary embodiment.

As illustrated in FIG.14, the pointing system 1000-3 according to another exemplary embodiment includes the pointing apparatus 100 and the display apparatus 300-4.

The pointing apparatus 100 has been described above, and thus, the overlapped description is omitted. The display apparatus 300-4 receives a sensing value on a motion of the pointing apparatus 100 from the pointing apparatus 100, generates a control command with respect to a pointer, and displays the pointer in the display. The above described functions of the image processor 300-1 and the interface apparatus 200 are included in the display apparatus 300-4. The display apparatus 300-4 displays the pointer in the display according to the motion of the pointing apparatus 100.

Hereinafter, a pointing method according to various exemplary embodiments will be described.

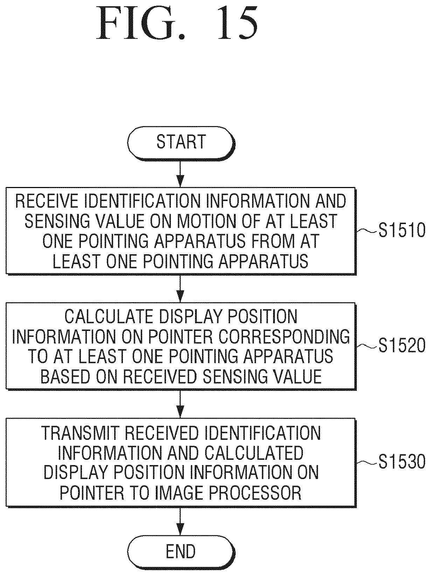

FIG. 15 is a flowchart provided to describe a pointing method according to an exemplary embodiment.

Referring to FIG. 15, a pointing method according to an exemplary embodiment includes receiving identification information and a sensing value on a motion of at least one pointing apparatus from the at least one pointing apparatus (S1510), calculating display position information of a pointer corresponding to the at least one pointing apparatus based on the received sensing value (S1520), and transmitting the received identification information and the calculated display position information on the pointer to an image processor (S1530).

In addition, the pointing method may further include determining image information on the pointer corresponding to the at least one pointing apparatus according to the received identification information and transmitting the determined image information to the image processor.

In addition, the pointing method may further include performing pairing with the at least one pointing apparatus in response to a pairing button of the pointing apparatus being manipulated.

In response to a new pointing apparatus requesting for pairing while a predetermined number of pointing apparatuses are paired with the interface apparatus, the pointing method may further include disconnecting pairing of one of the plurality of pointing apparatuses paired with the interface apparatus and performing pairing with the new pointing apparatus.

In addition, in response to a new pointing apparatus requesting for pairing while the predetermined number of pointing apparatuses are paired with the interface apparatus, and the new pointing apparatus having the higher pairing priority than the plurality of pointing apparatuses paired with the interface apparatus, the pointing method may further include disconnecting pairing of one of the plurality of pointing apparatuses paired with the interface apparatus and performing pairing with the new pointing apparatus.

In addition, in response to a limit being set on the number of pointers which are displayed simultaneously, the pointing method may further include transmitting the identification information on the pointing apparatus and the calculated display position information on the pointer to the image processor in the order that the sensing value on the motion is received so that only the limited number of pointers are displayed simultaneously.

In response to a control command to set a pointer being received from the at least one pointing apparatus, the pointing method may further include generating a UI screen for setting a pointer and transmitting the generated UI screen to the image processor.

In response to a control command to convert an active window being received from the at least one pointing apparatus, the pointing method may further include generating a control command to convert and display the active window and transmitting the generated control command to the image processor.

In response to a control command to display a highlight object being received from the at least one pointing apparatus, the pointing method may further include generating a control command to display the highlight object and transmitting the generated control command to the image processor.

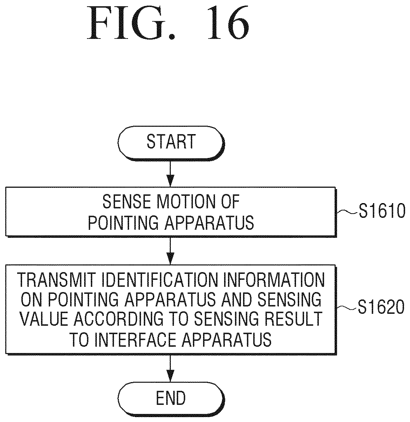

FIG. 16 is a flowchart provided to describe a pointing method according to an exemplary embodiment.

Referring to FIG. 16, the pointing method according to an exemplary embodiment includes sensing a motion of a pointing apparatus (S1610) and transmitting identification information on the pointing apparatus and a sensing value according to the sensing result to an interface apparatus (S1620).

In response to a pairing button of the pointing apparatus being manipulated, the pointing method may further include performing pairing with the interface apparatus.

In response to a set button of the pointing apparatus being manipulated, the pointing method may further include transmitting a control command to display a UI screen for setting the pointer to the interface apparatus.

In response to a conversion button of the pointing apparatus being manipulated, the pointing method may further include generating a control command to display a highlight object and transmitting the generated control command to the interface apparatus.

Meanwhile, the above described pointing method may be stored in a non-transitory computer readable medium which stores a program for executing the method.

The non-transitory computer readable recording medium refers to a medium which may store data permanently or semi-permanently rather than storing data for a short time such as a register, a cache, and a memory and may be readable by an apparatus. As an example, the non- transitory computer readable recording medium may be realized as a compact disc (CD), a digital versatile disk (DVD), a hard disk, a Blu-ray disk, a universal serial bus (USB), a memory card, a read-only memory (ROM), etc.

According to the above various exemplary embodiments, an aspect of the present disclosure provides a method of resolving the visibility deterioration problem of a laser pointer in a large display device such as Liquid Crystal Display (LCD), Plasma Display Panel (PDP), Organic Light-Emitting Diode (OLED), etc.

In addition, according to the above exemplary embodiments, an aspect of the present disclosure may provide the usability of using a laser pointer in a 3D space through a sensor embedded in a pointing apparatus without mounting any additional device on a display apparatus.

In addition, according to the above exemplary embodiments, it is possible to use a presentation mode and a mouse mode selectively in a single apparatus. The pointer according to the above exemplary embodiments operates separately from the common PC mouse, and thus, does not cause any confusion or inconvenience in use.

In addition, the pointer according to the above exemplary embodiments employs the absolute pointing method, and thus, provides intuitive usability which is similar to the usability of the laser pointer.

In addition, the laser pointer in the related art causes the safety risk when a light of the laser pointer is directed at an eye, but the pointer according to the above exemplary embodiments does not cause such problem.

In addition, the interface apparatus according to the above exemplary embodiments is an image processor and may be embedded in STB, computer, laptop computer, or display apparatus such as TV, monitor, projector, etc.

In case of the embedded interface apparatus, a part or all of the functions of the above described interface controller may be realized in a controller of each apparatus.

The foregoing exemplary embodiments and advantages are merely exemplary and are not to be construed as limiting the present inventive concept. The present teaching can be readily applied to other types of devices. Also, the description of the exemplary embodiments is intended to be illustrative, and not to limit the scope of the claims, and many alternatives, modifications, and variations will be apparent to those skilled in the art.

## Claims

1. An interface apparatus (200) comprising:
a communicator (210) configured to receive identification information and a sensing value on a motion of each of a plurality of pointing apparatuses (100-1, 100-2) from the plurality of pointing apparatuses; and
an interface controller (220) configured to control the communicator to calculate display position information of a pointer corresponding to each of the plurality of pointing apparatuses based on the received sensing values and transmit the identification information and the calculated display position information on each pointer to an image processor (300-1),
wherein the interface controller is configured to control the communicator to identify image information of the respective pointer corresponding to each of the pointing apparatuses based on the received identification information and transmit the identified image information for each pointer to the image processor,
wherein each image information comprises information indicating a display pattern, which is different for each image information, on a display apparatus.

2. The interface apparatus as claimed in claim 1, wherein the communicator comprises a wired communication port, and
wherein the interface apparatus is connected to the image processor through the wired communication port.

3. The interface apparatus as claimed in any one of claims 1 to 2, further comprising:
a pairing part configured to perform pairing with at least one pointing apparatus,
wherein in response to the pairing part being manipulated, the interface controller is configured to control the communicator to perform pairing with the at least one pointing apparatus.

4. The interface apparatus as claimed in any one of claims 1 to 3, wherein in response to a pairing command being received from the image processor through the communicator, the interface controller is configured to control the communicator to perform pairing with at least one pointing apparatus.

5. The interface apparatus as claimed in any one of claims 1 to 4, wherein in response to pairing being requested by a new pointing apparatus while a predetermined number of plurality of pointing apparatuses are paired with the interface apparatus, the interface controller is configured to control the communicator to disconnect pairing of one of the plurality of pointing apparatuses paired with the interface apparatus and perform pairing with the new pointing apparatus.

6. The interface apparatus as claimed in any one of claims 1 to 5, wherein in response to pairing being requested by a new pointing apparatus while a predetermined number of plurality of pointing apparatuses are paired with the interface apparatus, and the new pointing apparatus having a higher pairing priority than the plurality of pointing apparatuses paired with the interface apparatus, the interface controller is configured to control the communicator to disconnect pairing of one of the plurality of pointing apparatuses paired with the interface apparatus and perform pairing with the new pointing apparatus.

7. The interface apparatus as claimed in any one of claims 1 to 6, wherein the identification information received from the at least one pointing apparatus comprises a MAC address.

8. The interface apparatus as claimed in any one of claims 1 to 7, further comprising:
a storage,
wherein the storage is configured to store an application for calculating the display position information on the pointer corresponding to the at least one pointing apparatus based on the received sensing value.

9. The interface apparatus as claimed in any one of claims 1 to 8, wherein in response to a control command to set a pointer being received from the at least one pointing apparatus, the interface controller is configured to control the communicator to generate a User Interface, UI, screen for setting a pointer and transmit the generated UI screen to the image processor.

10. The interface apparatus as claimed in any one of claims 1 to 9, wherein in response to a control command to convert an active window being received from at least one pointing apparatus, the interface controller is configured to control the communicator to generate a control command for the image processor to convert and display an active window and transmit the generated control command to the image processor.

11. The interface apparatus as claimed in any one of claims 1 to 10, wherein in response to a control command to display a highlight object being received from at least one pointing apparatus, the interface controller is configured to control the communicator to generate a control command for the image processor to display the highlight object and transmit the generated control command to the image processor.

## Patentansprüche

1. Schnittstellenvorrichtung (200), die Folgendes umfasst:
ein Kommunikationsgerät (210), das so konfiguriert ist, dass es Identifizierungsdaten und einen Messwert zu einer Bewegung jeder von mehreren Zeigevorrichtungen (100-1, 100-2) aus den mehreren Zeigevorrichtungen empfängt, und
eine Schnittstellensteuerung (220), die so konfiguriert ist, dass sie das Kommunikationsgerät so steuert, dass es auf der Grundlage der empfangenen Messwerte Anzeigepositionsdaten für einen Zeiger entsprechend jeder der mehreren Zeigevorrichtungen berechnet und die Identifizierungsdaten und die berechneten Anzeigepositionsdaten zu jedem Zeiger an einen Bildprozessor (300-1) übermittelt,
wobei die Schnittstellensteuerung so konfiguriert ist, dass sie das Kommunikationsgerät so steuert, dass es auf der Grundlage der empfangenen Identifizierungsdaten Bilddaten zu dem jeweiligen Zeiger entsprechend jeder der Zeigevorrichtungen identifiziert und die identifizierten Bilddaten für jeden Zeiger an den Bildprozessor übermittelt,
wobei alle Bilddaten Daten umfassen, die ein Anzeigemuster auf einer Anzeigevorrichtung angeben, das sich für alle Bilddaten unterscheidet.

2. Schnittstellenvorrichtung nach Anspruch 1, wobei das Kommunikationsgerät einen kabelgebundenen Kommunikationsanschluss umfasst und
wobei die Schnittstellenvorrichtung über den kabelgebundenen Kommunikationsanschluss mit dem Bildprozessor verbunden ist.

3. Schnittstellenvorrichtung nach einem der Ansprüche 1 und 2, die ferner Folgendes umfasst: einen Verbindungsteil, der so konfiguriert ist, dass er das Verbinden mit mindestens einer Zeigevorrichtung durchführt,
wobei die Schnittstellensteuerung so konfiguriert ist, dass sie als Reaktion auf das Betätigen des Verbindungsteils das Kommunikationsgerät so steuert, dass es das Verbinden mit der mindestens einen Zeigevorrichtung durchführt.

4. Schnittstellenvorrichtung nach einem der Ansprüche 1 bis 3, wobei die Schnittstellensteuerung so konfiguriert ist, dass sie als Reaktion auf das Empfangen eines Verbindungsbefehls aus dem Bildprozessor über das Kommunikationsgerät das Kommunikationsgerät so steuert, dass es das Verbinden mit mindestens einer Zeigevorrichtung durchführt.

5. Schnittstellenvorrichtung nach einem der Ansprüche 1 bis 4, wobei die Schnittstellensteuerung so konfiguriert ist, dass sie als Reaktion auf das Anfordern eines Verbindens durch eine neue Zeigevorrichtung, wenn eine vorgegebene Anzahl mehrerer Zeigevorrichtungen mit der Schnittstellenvorrichtung verbunden sind, das Kommunikationsgerät so steuert, dass es eine Verbindung einer der mehreren mit der Schnittstellenvorrichtung verbundenen Zeigevorrichtungen trennt und das Verbinden mit der neuen Zeigevorrichtung durchführt.

6. Schnittstellenvorrichtung nach einem der Ansprüche 1 bis 5, wobei die Schnittstellensteuerung so konfiguriert ist, dass sie als Reaktion auf das Anfordern eines Verbindens durch eine neue Zeigevorrichtung, wenn eine vorgegebene Anzahl mehrerer Zeigevorrichtungen mit der Schnittstellenvorrichtung verbunden sind und die neue Zeigevorrichtung eine höhere Verbindungspriorität besitzt als die mehreren mit der Schnittstellenvorrichtung verbundenen Zeigevorrichtungen, das Kommunikationsgerät so steuert, dass es eine Verbindung einer der mehreren mit der Schnittstellenvorrichtung verbundenen Zeigevorrichtungen trennt und das Verbinden mit der neuen Zeigevorrichtung durchführt.

7. Schnittstellenvorrichtung nach einem der Ansprüche 1 bis 6, wobei die aus der mindestens einen Zeigevorrichtung empfangenen Identifizierungsdaten eine MAC-Adresse umfassen.

8. Schnittstellenvorrichtung nach einem der Ansprüche 1 bis 7, die ferner Folgendes umfasst: einen Speicher,
wobei der Speicher so konfiguriert ist, dass er eine Anwendung zum Berechnen der Anzeigepositionsdaten zu dem der mindestens einen Zeigevorrichtung entsprechenden Zeiger auf der Grundlage des empfangenen Messwerts speichert.

9. Schnittstellenvorrichtung nach einem der Ansprüche 1 bis 8, wobei die Schnittstellensteuerung so konfiguriert ist, dass sie als Reaktion auf das Empfangen eines Steuerbefehls zum Einstellen eines Zeigers aus der mindestens einen Zeigevorrichtung das Kommunikationsgerät so steuert, dass es eine Benutzerschnittstellenbildschirmanzeige (BS-Bildschirmanzeige) zum Einstellen eines Zeigers erstellt und die erstellte BS-Bildschirmanzeige an den Bildprozessor übermittelt.

10. Schnittstellenvorrichtung nach einem der Ansprüche 1 bis 9, wobei die Schnittstellensteuerung so konfiguriert ist, dass sie als Reaktion auf das Empfangen eines Steuerbefehls zum Umwandeln eines aktiven Fensters aus mindestens einer Zeigevorrichtung das Kommunikationsgerät so steuert, dass es einen Steuerbefehl zum Umwandeln und Anzeigen eines aktiven Fensters für den Bildprozessor erstellt und den erstellten Steuerbefehl an den Bildprozessor übermittelt.

11. Schnittstellenvorrichtung nach einem der Ansprüche 1 bis 10, wobei die Schnittstellensteuerung so konfiguriert ist, dass sie als Reaktion auf das Empfangen eines Steuerbefehls zum Anzeigen eines markierten Objekts aus mindestens einer Zeigevorrichtung das Kommunikationsgerät so steuert, dass es einen Steuerbefehl zum Anzeigen des markierten Objekts für den Bildprozessor erstellt und den erstellten Steuerbefehl an den Bildprozessor übermittelt.

## Revendications

1. Appareil d'interface (200), comprenant :
une unité de communication (210), configurée pour recevoir une information d'identification et une valeur de détection relatives à un déplacement de chaque appareil de pointage d'une pluralité d'appareils de pointage (100-1, 100-2) ; et
un contrôleur d'interface (220), configuré pour contrôler l'unité de communication pour calculer une information de position d'affichage d'un pointeur correspondant à chaque appareil de pointage de la pluralité d'appareils de pointage sur la base des valeurs de détection reçues, et émettre l'information d'identification et l'information de position d'affichage calculée sur chaque pointeur vers un processeur d'image (300-1),
le contrôleur d'interface étant configuré pour contrôler l'unité de communication pour identifier une information d'image du pointeur respectif correspondant à chacun des appareils de pointage sur la base de l'information d'identification reçue, et émettre l'information d'image identifiée pour chaque pointeur vers le processeur d'image,
chaque information d'image comprenant une information indiquant un modèle d'affichage, qui est différent pour chaque information d'image, sur un appareil d'affichage.

2. Appareil d'interface selon la revendication 1, dans lequel l'unité de communication comprend un port de communication câblé, et
l'appareil d'interface étant connecté au processeur d'image par l'intermédiaire du port de communication câblé.

3. Appareil d'interface selon l'une quelconque des revendications 1 et 2, comprenant en outre :
une partie d'appariement, configurée pour réaliser un appariement avec au moins un appareil de pointage,
le contrôleur d'interface étant configuré pour, en réponse à la manipulation de la partie d'appariement, contrôler l'unité de communication pour réaliser un appariement avec l'au moins un appareil de pointage.

4. Appareil d'interface selon l'une quelconque des revendications 1 à 3, dans lequel, en réponse à une commande d'appariement reçue du processeur d'image par l'intermédiaire de l'unité de communication, le contrôleur d'interface est configuré pour contrôler l'unité de communication pour réaliser un appariement avec l'au moins un appareil de pointage.

5. Appareil d'interface selon l'une quelconque des revendications 1 à 4, dans lequel, en réponse à une demande d'appariement par un nouvel appareil de pointage pendant qu'un nombre prédéterminé d'appareils de pointage d'une pluralité d'appareils de pointage sont appariés avec l'appareil d'interface, le contrôleur d'interface est configuré pour contrôler l'unité de communication pour déconnecter l'appariement d'un appareil de pointage de la pluralité d'appareils de pointage appariés avec l'appareil d'interface et réaliser un appariement avec le nouvel appareil de pointage.

6. Appareil d'interface selon l'une quelconque des revendications 1 à 5, dans lequel, en réponse à une demande d'appariement par un nouvel appareil de pointage pendant qu'un nombre prédéterminé d'appareils de pointage d'une pluralité d'appareils de pointage sont appariés avec l'appareil d'interface, et le nouvel appareil de pointage ayant une priorité d'appariement supérieure à la pluralité d'appareils de pointage appariés avec l'appareil d'interface, le contrôleur d'interface est configuré pour contrôler l'unité de communication pour déconnecter l'appariement d'un appareil de pointage de la pluralité d'appareils de pointage appariés avec l'appareil d'interface et réaliser un appariement avec le nouvel appareil de pointage.

7. Appareil d'interface selon l'une quelconque des revendications 1 à 6, dans lequel l'information d'identification reçue de l'au moins appareil de pointage comprend une adresse MAC.

8. Appareil d'interface selon l'une quelconque des revendications 1 et 7, comprenant en outre : un stockage,
le stockage étant configuré pour stocker une application pour calculer l'information de position d'affichage sur le pointeur correspondant à l'au moins appareil de pointage sur la base de la valeur de détection reçue.

9. Appareil d'interface selon l'une quelconque des revendications 1 et 8, dans lequel, en réponse à une commande de contrôle de réglage d'un pointeur, reçue de l'au moins un appareil de pointage, le contrôleur d'interface est configuré pour contrôler l'unité de communication pour générer un écran d'interface d'utilisateur (UI) pour régler un pointeur, et émettre l'écran d'UI généré vers le processeur d'image.

10. Appareil d'interface selon l'une quelconque des revendications 1 et 9, dans lequel, en réponse à une commande de contrôle de conversion d'une fenêtre active, reçue d'au moins un appareil de pointage, le contrôleur d'interface est configuré pour contrôler l'unité de communication pour générer une commande de contrôle pour le processeur d'image pour convertir et afficher une fenêtre active, et émettre la commande de contrôle générée vers le processeur d'image.

11. Appareil d'interface selon l'une quelconque des revendications 1 et 10, dans lequel, en réponse à une commande de contrôle d'affichage d'un objet en surbrillance, reçue d'au moins un appareil de pointage, le contrôleur d'interface est configuré pour contrôler l'unité de communication pour générer une commande de contrôle pour le processeur d'image pour afficher l'objet en surbrillance, et émettre la commande de contrôle générée vers le processeur d'image.
